Europäisches Patentamt

(19) European Patent Office

Office européen des brevets

(11) Publication number: **0 336 302 B1**

(12) **EUROPEAN PATENT SPECIFICATION**

(45) Date of publication of the patent specification:
26.09.90

(51) Int. Cl.⁵: **H04Q 11/04**, H04Q 3/68

(21) Application number: 89105649.1

(22) Date of filing: 30.03.89

(54) One-sided multistage switching network.

(30) Priority: 08.04.88 PL 271711

(43) Date of publication of application:
11.10.89 Bulletin 89/41

(45) Publication of the grant of the patent:
26.09.90 Bulletin 90/39

(84) Designated Contracting States:
DE FR GB IT NL SE

(56) References cited:
PROCEEDINGS 1987 INTERNATIONAL CONFERENCE
ON COMMUNICATION TECHNOLOGY, pages 982-985,
Nanjing, CN; A. JAJSZCZYK: "On triangular digital
switching networks"
IEEE TRANSACTIONS ON COMMUNICATIONS, vol.
COM-35, no. 3, March 1987, pages 275-282, New York,
US; K.-Q. LIAO et al.: "Videoconference traffic and
network design"
PATENTABSTRACTS OF JAPAN, vol. 5,
no. 192 (E-85)(864), 8th December 1981; &
JP-A-56 115 091
IEEE TRANSACTIONS ON COMMUNICATIONS, vol.
COM-35, no. 12, December 1987, pages 1383-1384, New
York, US; A. JAJSZCZYK: "One-sided switching
networks composed of digital switching matrices"

(73) Proprietor: POLITECHNIKA POZNANSKA, pl. M.
Sklodowskiej-Curie 5, 60-965 Poznan(PL)

(72) Inventor: Jajszczyk, Andrzej, ul. Bulgarska 76/1,
PL-60-321 Poznan(PL)
Inventor: Kabacinski, Wojciech, Os. Bohaterów II Wojny
Swiatowej 35/69, PL-61-386 Poznan(PL)

(74) Representative: Ebbinghaus, Dieter et al, Patentanwälte
v. Füner, Ebbinghaus, Finck Mariahilfplatz 2 & 3,
D-8000 München 90(DE)

## Description

This invention relates to digital switching systems. In particular it relates to a one-sided multistage switching network composed of triangular switches, which is especially useful for the construction of a telecommunication system and for telephone exchanges.

The structures of integrated switches which mix in the same chip or in the same printed board both time and space switching are well known. One-sided matrices lead to so-called triangular switches. These switches can be used for constructing a switching network whose capacity is greater than the capacity of a single switch. Structures of one-sided switching networks composed of triangular switches have been presented in several papers. In publications such as J. Cornu and M. Meinck "ITT 1240 Digital Exchange: Advanced Component Technology", Electrical Communication, 1981, 56, pages 161 to 172, and W. Frank, M. C. Rahier, D. Sallaerts and D. C. Upp "System 12: Dual Switch Port", Electrical Communication, 1985, 59, pages 54 to 59, the structures of triangular switches are described. Such switches were used for constructing a switching network as described in a publication of J. M. Cotton, K. Giesken, A. Lawrence and D. C. Upp "ITT 1240 Digital Exchange: Digital Switching Network", Electrical Communication, 1981, 56, pages 148 to 160. In this switching network the triangular switches are grouped into four stages. Some of the terminals of each switch in one stage are connected with the terminals of the switches in the next stage, while remaining terminals of these switches are connected with the terminals of the switches in the previous stage. The terminals of the switching network are formed by some terminals of the switches in the first stage of the switching network. In the described switching network there are no connections between switches in the same stage.

In another solution as described in a publication of A. Jajszczyk "On Triangular Digital Switching Networks", Proc. 1987 Int. Conf. on Communication Technology, Nanjing, P.R.China, 1987, pages 982 to 985, switches in some or in all stages are replaced with one-stage full access switching blocks. These blocks are composed of triangular switches. In the switching network constructed in such a way, some of the switches in the same stage are connected to each other.

A purpose of the invention is the construction of such one-sided multistage switching networks, which can be constructed of fewer number of triangular switches than those switching networks which were previously known.

According to the invention, the first stage of a switching network is composed of partial access switching blocks. In such a block some of the terminals can be connected to some other terminals, and these terminals constitute the terminals of the switching network, while the remaining terminals of the block are used for connections between the switching block and the switches of the next stage of the network.

This solution enables to construct the one-sided multistage switching network, which is nonblocking and full access one, although one stage of this network, i.e. the first stage, is composed of partial access switching blocks. Such a structure of a switching networks makes it possible to construct a switching network which has fewer switches then networks previously known.

Embodiments of the invention will now be described with reference to the accompanying drawings wherein:

Fig. 1 shows a-partial access switching block composed of m triangular-switches,

Fig. 2 shows a two-stage switching network having 128 PCM links.

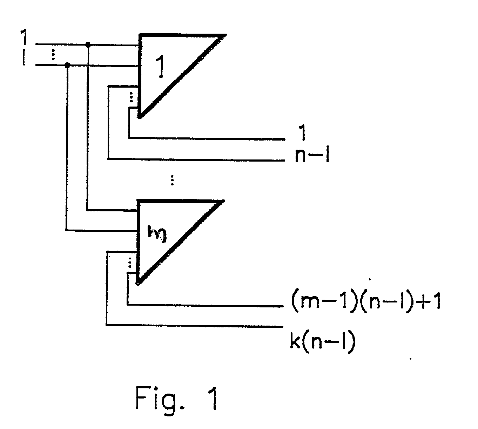

The switching network of Fig. 1 constitutes a partial access one-stage switching block which is composed of m triangular switches. Each of these m switches has n terminals. The first 1 terminals of the first switch are connected with 1 terminals of each of the remaining m-1 switches of the switching block, and these terminals constitute the terminals of the switching network through which the connection with any other terminal can be made. The remaining m(n-1) terminals of the block can be used for connections with switches in the next stage from the terminals 1 to n-1 of the first triangular switch to the terminals (m-1)(n-1)+1 to m(n-1) of the last triangular switch.

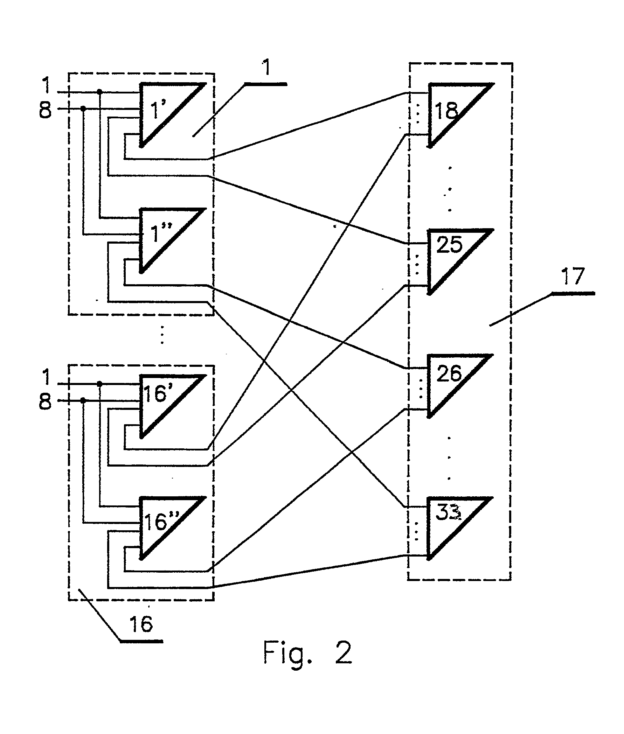

The switching network of Fig. 2 is a full access two-stage switching network having a capacity of 128 PCM links. This network contains 16 partial access blocks, from 1 to 16, in the first stage, and 16 triangular switches, from 18 to 33, in the second stage. Each of the switching blocks in the first stage contains a pair of triangular switches, from 1', 1" to 16', 16". Each of the triangular switches in the network has a capacity of 16 PCM links. In each block in the first stage, the first 8 PCM links of the first switch of the pair are connected to the first 8 PCM links of the second switch of the pair, and this PCM links constitute the terminals of the switching network, what results in the total capacity of 8 x 16 128 PCM links. The remaining PCM links in the blocks 1 to 16 are used for connections with the switches 18 to 33 of the second stage 17.

The switching network shown in Fig. 2 comprises 48 triangular switches arranged in two stages, while the networks, which have been previously known, contained a minimum of 60 such switches. The partial access blocks can also be used in networks containing more than two stages. In case of the network having the capacity of 2048 PCM links composed of triangular switches containing 8 PCM links each, a previously known network contains 24439 switches and comprises seven stages, while a network having a partial access blocks contains only 9552 switches and has three stages.

## Claims

1. A one-sided multistage switching network composed of one-sided switching blocks (1–16, 17) arranged in stages, characterized in that the input stage contains partial access switching blocks (1–16) some of the terminals (1–8) of which can be connected to other terminals of the block, and these terminals constitute the terminals of the switching network, while the remaining terminals of the block are used for connections with switching blocks of the next stage (17) of the network.

2. A one-sided multistage switching network according to claim 1, characterized in that the first stage is arranged in blocks (1 to 16), each block contains two triangular switches (1', 1" to 16', 16"), and the half of the terminals of the first triangular switch (1' to 16') of the pair is connected to the half of the terminals of the second switch (1" to 16") of the pair, and these terminals constitute the terminals of the switching network, while the remaining terminals in the blocks (1 to 16) are used for connections with the switches (18 to 33) of the second stage (17).

**Patentansprüche**

1. Einseitiges mehrstufiges Schaltnetzwerk aus einseitigen, in Stufen angeordneten Blöcken (1 bis 16, 17), dadurch gekennzeichnet, daß die Eingangsstufe Partialzugriffs-Schaltblöcke (1 bis 16) aufweist, wobei einige der Anschlüsse (1 bis 8) der Partialzugriffs-Schaltblöcke (1 bis 16) mit anderen Anschlüssen der Blöcke verbunden werden können und diese Anschlüsse die Anschlüsse des Schaltnetzwerks bilden, während die restlichen Anschlüsse des Blockes für Verbindungen mit Schaltblöcken der nächsten Stufe (17) des Netzwerks benutzt werden.

2. Einseitiges mehrstufiges Schaltnetzwerk nach Anspruch 1, dadurch gekennzei chnet, daß die erste Stufe in Blöcken (1 bis 16) angeordnet ist, jeder Block zwei Dreieckschalter (1', 1" bis 16', 16") enthält und die Hälfte der Anschlüsse der ersten Dreieckschalter (1' bis 16') des Paars mit der Hälfte der Anschlüsse der zweiten Schalter (1" bis 16") des Paars verbunden ist und diese Anschlüsse die Anschlüsse des Schaltnetzwerkes bilden, während die restlichen Anschlüsse der Blöcke (1 bis 16) für Verbindungen mit den Schaltern (18 bis 33) der zweiten Stufe (17) dienen.

**Revendications**

1. Réseau de commutation à plusieurs étages, de type unilatéral, composé de blocs de commutation de type unilatéral (1–16, 17) disposés en plusieurs étages, caractérisé en ce que l'étage d'entrée contient des blocs de commutation à accès partiel (1–16) dont certaines bornes (1–8) peuvent être connectées à d'autres bornes du bloc, et ces bornes constituent les bornes du réseau de commutation, alors que les bornes restantes du bloc sont utilisées pour les connexions avec des blocs de commutation de l'étage suivant (17) du réseau.

2. Réseau de commutation à plusieurs étages de type unilatéral selon la revendication 1, caractérisé en ce que le premier étage est disposé en blocs (1 à 16), chaque bloc contient deux commutateurs triangulaires (1', 1" à 16', 16"), la moitié des bornes du premier commutateur triangulaire (1' à 16') de la paire est connectée à la moitié des bornes du second commutateur (1" à 16") de la paire, et ces bornes constituent les bornes du réseau de commutation, alors que les bornes restantes des blocs (1 à 16) sont utilisées pour les connexions aux commutateurs (18 à 33) du second étage (17).

Fig. 1

Fig. 2